Europäisches Patentamt

European Patent Office

Office européen des brevets

(19)

(11) Veröffentlichungsnummer: **0 288 942**

**A2**

## EUROPÄISCHE PATENTANMELDUNG

(21) Anmeldenummer: 88106554.4

(22) Anmeldetag: 23.04.88

(51) Int. Cl.⁴: **C08G 59/14 , C09D 5/44**

(30) Priorität: 28.04.87 AT 1049/87

(43) Veröffentlichungstag der Anmeldung:
02.11.88 Patentblatt 88/44

(84) Benannte Vertragsstaaten:
**BE CH DE ES FR GB IT LI NL SE**

(71) Anmelder: **VIANOVA KUNSTHARZ AKTIENGESELLSCHAFT**
**Postfach 191 Leechgasse 21**
**A-8011 Graz(AT)**

(72) Erfinder: **Kriessmann, Ingo, Dr.**
**Am Lindenhof 37**
**A-8043 Graz(AT)**
Erfinder: **Paar, Willibald, Dr.**
**Schanzelgasse 19**
**A-8010 Graz(AT)**

(74) Vertreter: **Majcen, Hildegard, Dr.**
**Vianova Kunstharz AG Patentabteilung**
**Leechgasse 21 Postfach 191**
**A-8011 Graz(AT)**

(54) Verfahren zur Herstellung von kationischen Harzen auf Basis von phosphorsäuremodifizierten Epoxidharzen.

(57) Die Erfindung betrifft ein Verfahren zur Herstellung von kationischen Harzen auf der Basis von Epoxidharzen, die durch den Einbau von Phosphorsäuresegmenten modifiziert sind.

Die Umsetzung der Phosphorsäure erfolgt in einer mehrstufigen Reaktion, wobei in der ersten Stufe die Orthophosphorsäure mit 2 Mol einer Monoepoxidverbindung oder eine Polyphosphorsäure mit n-1 Mol eines Monoalkohols und anschließend mit n + 1 Mol einer Monoepoxidverbindung zum Diester umgesetzt wird. Die letzte Säuregruppe wird mit Di- oder Polyepoxidharzen umgesetzt, wobei Produkte resultieren, die gegebenenfalls noch intakte Epoxidgruppen aufweisen. Die Einführung der protonisierbaren Gruppen erfolgt über die Epoxidgruppen und/oder über die vorhandenen oder freigesetzten Hydroxylgruppen. Die Bindemittel können mit anderen Härtungskomponenten kombiniert werden oder als selbstvernetzende Bindemittel formuliert werden.

EP 0 288 942 A2

# Verfahren zur Herstellung von kationischen Harzen auf Basis von phosphorsäuremodifizierten Epoxidharzen.

Die Erfindung betrifft ein Verfahren zur Herstellung von kationischen Harzen auf der Basis von Epoxidharzen, die durch den Einbau von Phosphorsäuresegmenten modifiziert sind.

Gemäß dem derzeitigen Stand der Technik wird Phosphorsäure zur Protonierung kationischer Harze, wie sie insbesonders als kathodisch abscheidbare Lackbindemittel bekannt sind, eingesetzt. Dieser Einsatz wird beispielsweise in der US-PS 4,304,703, der DE-OS 22 65 195, der US-PS 3,954,588 oder der DE-OS 27 53 595 beschrieben. In allen diesen Fällen wird die Phosphorsäure bei der eleketrischen Abscheidung durch Entladung freigesetzt. Soweit bisher eine Modifizierung von Epoxidharzen mit Phosphorsäure erfolgt, waren die Produkte durch einen Anteil an freien Säuregruppen gekennzeichnet, wodurch die Produkte durch Salzbildung mit Basen wasserlöslich gemacht werden konnten. Für den Einsatz in kationischen Harzen sind diese Produkte naturgemäß nicht geeignet.

Es wurde nun gefunden, daß kationische Harze, welche als Ausgangsmaterial partiell mit Phosphorsäure modifizierte Epoxidharze, die keine freien Säuregruppen aufweisen, enthalten, insbesonders als kathodisch abscheidbare Lackbindemittel günstige Eigenschaften aufweisen.

Die Erfindung betrifft demgemäß ein Verfahren zur Herstellung von kationischen, nach Protonierung wasserverdünnbaren Harzen auf Basis von phosphorsäuremodifizierten Epoxidharzen, welches dadurch gekennzeichnet ist, daß man

(A1) 1 Mol Orthophosphorsäure mit 2 Mol einer Monoepoxidverbindung order

(A2) 1 Mol einer Polyphosphorsäure mit n P-Atomen mit n-1 Mol eines Monoalkohols mit mindestens 4 C-Atomen und anschließend mit n + 1 Mol einer Monoepoxidverbindung umsetzt und

(B) die erhaltenen Diester bei 60 bis 130°C mit mindestens einer Oxirangruppe einer Mono-, Di-oder Polyepoxidverbindung bis zu einer Säurezahl von weniger als 5, vorzugsweise von weniger als 3 mg KOH/g, reagiert und

(C) die vorhandenen Oxirangruppen mit primären und/oder sekundären Aminen in die Amin-Addukte oder durch tert. Amin-Säuregemische in quaternäre Ammoniumsalze überführt und/oder durch Reaktion der freien oder freigesetzten Hydroxylgruppen mit basischen und/oder ungesättigten Monoisocyanaten für die Protonierung oder Vernetzung notwendige Gruppen in bekannter Weise einführt.

Die Erfindung betrifft weiterhin die Verwendung der erfindungsgemäß hergestellten kationischen Harze als Bindemittel in kathodisch abscheidbaren Lacken.

Das Verfahren stellt ein mehrstufiges Verfahren dar, bei welchem im Falle der Orthophosphorsäure der Phosphorsäurediester durch Reaktion mit Monoepoxiden, wie Alkylenoxiden, Alkylglycidylethern oder Alkylglycidylestern erhalten wird. Bevorzugte Monoepoxidverbindungen sind dabei die Glycidylester von tert. Monocarbonsäuren, wie sie als KOCH-Säuren dem Fachmann bekannt sind. Die Umsetzung erfolgt, gegebenenfalls in einem aprotischen Lösemittel, wie Diethylenglykoldimethylether oder N-Methylpyrrolidon, durch Zugabe des Monoepoxids bei 30 bis 60°C·und Reaktion bis zum Erreichen der berechneten Säurezahl bei 60 - 80°C. Vorteilhafterweise werden die in der handelsüblichen 85%igen Phosphorsäure enthaltenen Wasseranteile mit einer entsprechenden Menge Phosphorpentoxid zu Phosphorsäure umgesetzt.

Bei Verwendung von Polyphosphorsäuren (mit durchschnittlich 3 - 5 Phosphorsäureeinheiten) kann als erste Stufe eine Veresterung mit Monoalkoholen mit 4 oder mehr Kohlenstoffatomen erfolgen. Diese Reaktion erfolgt gegebenenfalls in Gegenwart eines reaktionsinerten Lösemittels bei 30 bis 70°C. Der dabei entstehende Anteil an freier Orthophosphorsäure wird gemeinsam mit dem Monoester mit dem Monoepoxid zum Diester umgesetzt, sodaß sich für den Diester bei n Phosphoratomen in der Polyphosphorsäure ein Anteil von n-1 Mol Monoalkohol und n + 1 Mol Monoepoxidverbindung ergibt.

Die Veresterung der letzten Säuregruppen erfolgt dann mit einer Mono-, Di-oder Polyepoxidverbindung bei 60 bis 130°C bis zu einer Säurezahl von unter 5, vorzugsweise unter 3 mg KOH/g. Die Mengenverhältnisse werden so gewählt, daß mindestens eine Epoxidgruppe der Epoxidverbindung verestert wird. Das bei dieser Reaktion entstehende Produkt kann für die weiteren Umsetzungen noch intakte Epoxidgruppen aufweisen. Es können jedoch auch alle Epoxidgruppen mit den Phosphorsäurediestern umgesetzt sein; in diesem Falle stehen für die weiteren Umsetzungen die bei der Öffnung der Epoxidgruppen freigesetzten oder die bereits im Epoxidharz vorhandenen Hydroxylgruppen zur Verfügung.

Als Monoepoxidverbindungen kommen in dieser Stufe die Monoglycidylester oder Monoglycidylether, wie sie bereits oben angeführt sind, zum Einsatz.

Die in dieser Stufe eingesetzten Di-oder Polyglycidylverbindungen, z. B. auf der Basis von Polyalkylenglykolen, Dienpolymeren oder Phenolnovolaken sind dem Fachmann bekannt und im Handel in breiter Palette dem Verbraucher zugänglich.

Überraschenderweise werden durch diese stufenweise Reaktion sehr einheitliche Produkte erhalten, deren Oxirangruppen in bekannter Weise durch Umsetzung mit primären und/oder sekundären Aminen in Epoxid-Aminaddukte bzw. durch tert. Amin-Säuregemische in quaternäre Ammoniumsalze überführt werden können. Durch Reaktion der freien oder der bei anderen Reaktionen aus Oxirangruppen freigesetzten Hydroxylgruppen mit basischen oder ungesättigten Monoisocyanaten können ebenfalls für die Protonierung oder Vernetzung notwendige Gruppen in bekannter Weise eingeführt werden. Als Monoisocyanate werden vorteilhaft halbblockierte Diisocyanate, die als Blockierungsmittel z. B. ein N,N-Dialkylalkanolamin oder ein Hydroxyalkyl(meth)acrylat tragen, verwendet. Über die Oxiran-und Hydroxylgruppen kann ebenso eine Kettenverlängerung durch Dicarboxylverbindungen, Diamine, Säureanhydride oder Polyisocyantverbindungen erfolgen.

Es hat sich gezeigt, daß durch die erfindungsgemäße Einführung von Phosphorsäuresegmenten die Haftfestigkeit der Lacke auf dem Substrat bzw. die Haftung der Folgeschicht wesentlich verbessert werden kann. Die Gruppierungen zeigen auch eine katalytische Wirkung bei Vernetzungsreaktionen durch Umurethanisierung oder Umesterung sowie auch eine Verbesserung der Korrosionsfestigkeit der Lackfilme.

Die nachfolgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1:

(a) Herstellung des phosphorsäuremodifizierten Epoxidharzes:

Zu 130 Tlen 2-Ethylhexanol werden unter Kühlen und Rühren langsam 84 Tle einer handelsüblichen Polyphosphorsäure (entsprechend ca. 3 Wasserstoffäquivalenten) zugegeben und bei 30 bis 40°C bis zu einer Säurezahl verestert, welche einem Gemisch von 75 % eines Monoesters und 25 % freier Orthophosphorsäure entspricht. Das eingesetzte Ethylhexanol (1 Mol) ist dabei zu 75 % durch die Veresterung verbraucht; der Rest von 25 % dient als Lösemittel.

Unter weiterem Kühlen werden dem Reaktionsprodukt 233 Tle 2-Ethylhexylglycidylether (1,25 Mol) innerhalb von 30 Minuten zugesetzt. Die Temperatur wird dabei langsam auf ca. 40°C gesteigert und nach Abklingen der Exothermie auf 70°C erhöht und so lange gehalten, bis die dem Diester entsprechende Säurezahl erreicht ist.

50 Tle dieses Reaktionsproduktes werden in 133 Tlen Diethylenglykoldimethylether gelöst und nach Zugabe von 238 Tlen eines Diepoxidharzes auf der Basis von Bisphenol A (Epoxidäquivalentgewicht EEW = 475) bei 70°C bis 100°C bis zu einer Säurezahl unter 5 mg KOH/g umgesetzt.

Das Produkt weist ein EEW von ca. 1300 auf und kann in üblicher Weise weiterverarbeitet werden.

(b) Herstellung des kationischen Harzes:

Die erhaltene Harzlösung wird auf 70°C gekühlt und mit 16 Tlen Diethylaminopropylamin und 14 Tlen Diethanolamin versetzt und bei dieser Temperatur bis zu einem Epoxidwert von 0 reagiert.

(c) Herstellung eines Klarlackes und Prüfung:

75 Tle Festharz werden mit 25 Tlen einer Härtungskomponente auf Malonesterbasis , z. B. gemäß AT-PS 379.602 2 Stunden bei 80 bis 90°C homogenisiert und anschließend mit Bleioktoat (entsprechend 1 % Pb/Festharz) versetzt. Nach Neutralisation mit 45 mMol Ameisensäure/100 g Festharz wird der Ansatz auf einen Festkörpergehalt von 15 % verdünnt. Kathodisch beschichtete, nicht vorbehandelte Stahlbleche (Einbrennbedingungen 30 Minuten / 160°C) zeigen nach einer Salznebelbelastung von 800 Stunden praktisch keinen Angriff.

Beispiel 2

(a) Herstellung des phosphorsäuremodifizierten Epoxidharzes:

63 Tle einer handelsüblichen Orthophosphorsäure (85%ige wäßrige Lösung) werden mit 35 Tlen Phosphorpentoxid zu 98 Tlen 100%iger Orthophosphorsäure (1 Mol) umgesetzt. Dann werden bei 30 bis 40°C dem Ansatz 500 Tle eines Glycidylesters einer tert. $C_9$-$C_{11}$-Monocarbonsäure (2 Mol) zugegeben und bis zur theoretischen Säurezahl des Phosphorsäurediesters (281 mg KOH/g) reagiert.

Nach Zugabe einer Lösung von 475 Tlen eines Bisphenol-A Diepoxidharzes (EEW = ca. 475; 0,5 Mol) in 460 Tlen Diethylenglykoldimethylether wird die Veresterung bei 90°C bis zu einer Säurezahl von unter 5 mg KOH/g geführt. Das Produkt weist praktisch keine freien Epoxidgruppen auf.

(b) Herstellung eines kationischen Harzes:

Zu der oben erhaltenen Lösung wird bei 50°C unter Kühlen gleichmäßig eine Lösung von 582 Tlen eines mit Diethylethanolamin halbblockierten Toluylendiisocyanats in 249 Tlen Diethylenglykoldimethylether zugetropft. Nach Ende der Zugabe und Abklingen der exothermen Reaktion wird die Temperatur auf 70 bis 80°C gesteigert und diese Temperatur gehalten bis der NCO-Wert auf 0 gefallen ist.

(c) Herstellung eines Klarlacken und Prüfung des selbstvernetzenden Bindemittels:

Eine 100 g Festharz entsprechende Menge der Bindemittellösung wird mit 5,6 Tlen Dibutylzinndilaurat versetzt und nach Neutralisation mit 50 mMol Ameisensäure pro 100 g Festharz mit Wasser auf einen Festkörpergehalt von 15 % verdünnt. Aus diesem Klarlack werden in bekannter Weise zinkphosphatierte Stahlbleche beschichtet und 25 Minuten bei 160°C eingebrannt Die Beschichtungen zeigen nach einer Salznebelbelastung von 1200 Stunden praktisch keinen Angriff.

**Ansprüche**

1. Verfahren zur Herstellung von kationischen, nach Protonierung wasserverdünnbaren Harzen auf Basis von phosphorsäuremodifizierten Epoxidharzen, dadurch gekennzeichnet, daß man

(A1) 1 Mol Orthophosphorsäure mit 2 Mol einer Monoepoxidverbindung oder

(A2) 1 Mol einer Polyphosphorsäure mit n P-Atomen mit n-1Mol eines Monoalkohols mit mindestens 4 C-Atomen und anschließend mit n + 1 Mol einer Monoepoxidverbindung umsetzt und

(B) die erhaltenen Diester bei 60 bis 130°C mit mindestens einer Oxirangruppe einer Mono-, Di-oder Polyepoxidverbindung bis zu einer Säurezahl von weniger als 5, vorzugsweise von weniger als 3 mg KOH/g, reagiert und

(C) die vorhandenen Oxirangruppen mit primären und/oder sekundären Aminen in die Amin-Addukte oder durch tert. Amin-Säuregemische in quaternäre Ammoniumsalze überführt und/oder durch Reaktion der freien oder freigesetzten Hydroxylgruppen mit basischen und/oder ungesättigten Monoisocyanaten für die Protonierung oder Vernetzung notwendigen Gruppen in bekannter Weise einführt.

2. Verfahren nach Anspruch 1, dadurch gekennzeichnet, daß man einen gegebenenfalls ind er eingesetzten Phosphorsäure vorhandenen Wasseranteil mit der entsprechenden Menge Phosphorpentoxid in Orthophosphorsäure überführt.

3. Verfahren nach den Ansprüchen 1 und 2, dadurch gekennzeichnet, daß man als Monoepoxidverbindungen Alkylenoxide, Alkylglycidylether oder Alkylglycidylester, vorzugsweise die Glycidylester von tert. Monocarbonsäuren mit 9 bis 11 Kohlenstoffatomen einsetzt.

4. Verfahren nach den Ansprüchen 1 bis 3, dadurch gekennzeichnet, daß man zur Veresterung der dritten Säuregruppe Diepoxidharze auf Basis von Bisphenol A oder Polyepoxidharze auf Basis von Phenolnovolaken einsetzt.

5. Verwendung der nach den Ansprüchen 1 bis 4 hergestellten Bindemittel in kathodisch abscheidbaren Lacken.